# EUROPÄISCHE PATENTSCHRIFT

(11) **EP 1 451 765 B1**
(45) Veröffentlichungstag und Bekanntmachung des Hinweises auf die Patenterteilung: **03.05.2006**
(21) Anmeldenummer: 02776817.5
(22) Anmeldetag: 11.10.2002
(51) Int. Cl.: G06K 13/08

(54) **ANTRIEBSANORDNUNG FÜR WENIGSTENS EIN IN EINEM FAHRTSCHREIBER ANGEORDNETES CHIPKARTEN-AUFNAHMEAGGREGAT ZUM VERBRINGEN EINER CHIPKARTE IN DIE ENTNAHMEPOSITION**
DRIVE SYSTEM FOR AT LEAST ONE CHIP CARD RECEIVING UNIT ARRANGED IN A TACHOGRAPH AND FOR MOVING A CHIP CARD TO A REMOVAL POSITION
SYSTEME D'ENTRAINEMENT POUR AU MOINS UNE UNITE RECEPTACLE DE CARTES A PUCES DISPOSEE DANS UN TACHYGRAPHE ET PERMETTANT DE PLACER UNE CARTE A PUCE EN POSITION DE PRELEVEMENT

(30) Priorität: 07.12.2001 DE 10160276
(43) Veröffentlichungstag der Anmeldung: 01.09.2004
(73) Patentinhaber: SIEMENS AKTIENGESELLSCHAFT, 80333 München (DE)
(72) Erfinder: WAHLER, Torsten, 78073 Bad Dürrheim (DE)
(86) Internationale Anmeldenummer: PCT/DE2002/003854
(87) Internationale Veröffentlichungsnummer: WO 2003/050755

(56) Entgegenhaltungen:
- EP-A- 0 311 119
- DE-U- 8 906 634
- DE-U- 20 015 100

## Beschreibung

Antriebsanordnung für wenigstens ein in einem Fahrtschreiber angeordnetes Chipkarten-Aufnahmeaggregat zum Verbringen einer Chipkarte in die Entnahmeposition

Die Erfindung betrifft eine Antriebsanordnung für wenigstens ein in einem Fahrtschreiber angeordnetes Chipkarten-Aufnahmeaggregat zum Verbringen einer Chipkarte in die Entnahmeposition, wobei die Antriebsanordnung einen in seiner Drehrichtung umsteuerbaren Stellmotor, einen mit dem Stellmotor getrieblich in Wirkverbindung stehenden Steuerschieber und zwischen dem Steuerschieber und dem Chipkarten-Aufnahmeaggregat vorgesehene Übertragungsmittel umfasst.

Fahrtschreiber der gattungsgemäßen Art sind im allgemeinen als Einbaugeräte mit einem flachen, quaderförmigen Einbaugehäuse konzipiert. Einem Chipkarten-Aufnahmeaggregat und dessen Antriebsmitteln, die bewirken, dass eine in der Lese-/Schreibposition befindliche Chipkarte in die Entnahmeposition verbracht wird, steht daher von vornherein ein sehr geringer Bauraum zur Verfügung. Auf der anderen Seite verursachen während ihres Gebrauchs verformte, d.h. gewölbte bzw. gewellte Chipkarten, insbesondere wenn diese mit dem erforderlichen Kraftaufwand ausschließlich von Hand in die Lese-/Schreibposition vorgesteckt worden sind, einen erheblichen Kraftbedarf, um sie wieder in die Entnahmeposition transportieren zu können. Dieser Kraftbedarf muss von den Antriebsmitteln aufgebracht und übertragen werden, was einen stabilen Aufbau und somit ausreichend Bauraum erforderlich macht. Hinzu kommt, dass es einerseits aufgrund der geringen Bauhöhe des Fahrtschreibers erforderlich anderseits hinsichtlich der Kontaktierung zweckmäßig ist, das Chipkarten-Aufnahmeaggregat und die Antriebsmittel unmittelbar der Leiterplatte des Fahrtschreibers zuzuordnen. Auf letzterer herrscht jedoch, obwohl sie bezogen auf den Grundriss des Fahrtschreibergehäuses weitgehend formatfüllend ausgebildet ist, aufgrund eines hohen Bestückungsgrades erheblicher Platzmangel, so dass eine noch mögliche Anordnung des Chipkarten-Aufnahmeaggregates und dessen Antriebsmittel in der Regel eine Richtungsänderung der durch den Steuerschieber ausgeübten Schubkraft erforderlich macht. Dies gilt insbesondere bei einem für die gleichzeitige Erfassung wenigstens der Arbeits- und Ruhezeiten von Fahrer und Beifahrer ausgerüsteten Fahrtschreiber, in welchem zwei Chipkarten-Aufnahmeaggregate vorgesehen sind und letztlich auch aus Kostengründen lediglich ein einziger Stellmotor vorgesehen werden muss, mittels dessen unter Zwischenschaltung von den Kraftfluss umlenkenden Übertragungsmitteln der Transport der Chipkarte des Fahrers oder derjenigen des Beifahrers in die jeweilige Entnahmeposition zu bewirken ist.

Dokument DE-U-200 15 100, welches den Oberbegriff des Anspruches 1 bildet, sieht in diesem Zusammenhang eine Antriebsordnung zwischen einem von einem Stellmotor angetriebenen Steuerschieber und den in den betreffenden Chipkarten-Aufnahmeaggregaten gelagerten, den Chipkarten zugeordneten Schlitten keilgetriebliche Mittel vor, um die Bewegung des Steuerschiebers in Richtung Ausgeben der Chipkarten umzulenken. Derartige Übertragungsmittel machen aufgrund hoher Reibungsverluste durch Querkräfte und der systembedingten Kraftteilung eine erhöhte Leistung des Stellmotors erforderlich und bedingen infolge der notwendigen Führungsgenauigkeit der Bauteile, an denen die keilgetrieblichen Elemente ausgebildet sind, sehr hohen Fertigungsaufwand und erheblichen Bauraum.

Die Aufgabe der vorliegenden Erfindung bestand somit darin, eine gattungsgemäße Antriebsanordnung zu schaffen, die mit seriengerecht herstell- und montierbaren Bauteilen eine optimale Nutzung der zur Verfügung stehenden Leistung des Stellmotors bei hoher Funktionssicherheit bietet und mit einem möglichst geringen Raumbedarf realisierbar ist.

Die Lösung der gestellten Aufgabe sieht vor, dass als Übertragungsmittel ein flexibler, druckübertragender Kraftleiter dient und dass dem Kraftleiter eine richtungsumlenkende Führung zugeordnet ist.

Ein bevorzugtes Ausführungsbeispiel ist dadurch gekennzeichnet, dass als Kraftleiter einzelne, in einem Kanal frei beweglich geführte Druckelemente dienen und dass als Druckelemente Kugeln vorgesehen sind.

Ein vorteilhaftes Ausführungsbeispiel besteht darin, dass der Kraftleiter und der Steuerschieber als ein einziges, spritzgießtechnisch hergestelltes Bauteil ausgebildet sind, wobei der Kraftleiter aus einem elastomeren Strang mit daran angeformten Gleitkörpern aus nichtelastomerem Material besteht.

Weitere Ausführungsvarianten und zweckmäßige Ausgestaltungen der Erfindung beschreiben die nicht zitierten Unteransprüche oder gehen aus der Beschreibung der Zeichnungen hervor.

Der entscheidende Vorteil, den die Erfindung bietet, ist darin zu sehen, dass eine den Steuerschieber, das den Steuerschieber treibende Untersetzungsgetriebe und die Übertragungsmittel umfassende, modulare Antriebsanordnung ausbildbar ist, für die das bevorzugte Ausführungsbeispiel ein mit einem Deckel verschließbares Gehäuse vorsieht. Diese Baugruppe, in die lediglich der auf der Gegenseite der Leiterplatte des Fahrtschreibers angeordnete Stellmotor mit einem auf der Motorwelle befestigten Ritzel eingreift, beansprucht wenig Raum und kann auf einfache Weise variiert werden. Wesentlich ist, dass die Antriebsanordnung mit technisch einfachem, robusten und leicht montierbaren Mitteln realisiert werden kann und eine zufriedenstellende Funktionssicherheit bei hohem Wirkungsgrad bietet. Die gefundene Lösung ist außerdem toleranzunempfindlich und ermöglicht aufgrund der weitgehend unmittelbaren Einwirkung des Steuerschiebers auf ein Chipkarten-Aufnahmeaggregat bzw. auf einen in dem Chipkarten-Aufnahmeaggregat verschiebbar gelagerten, den Chipkarten zugeordneten Schlitten auch bei Verwendung eines Stellmotors relativ geringer Leistung, eine kurze Betätigungszeit für das Verbringen einer Chipkarte aus der Lese-/Schreibposition in die Entnahmeposition.

Erwähnenswert ist ferner, dass der Steuerschieber nicht zwingend rechtwinklig zu den Bewegungsrichtungen einer Chipkarte geführt sein muss. Über die vorgesehenen flexiblen Kraftleiter kann der Kraftfluss beliebig umgelenkt werden. Auch ist es bedeutungslos wenn bei Verwendung von zwei nebeneinander angeordneten Chipkarten-Aufnahmeaggregaten diese nahe beieinander oder relativ weit auseinander angeordnet sind. Jedenfalls ist die erfindungsgemäße Lösung auch dann anwendbar, wenn in dem betreffenden Fahrtschreiber die Chipkarten-Aufnahmeaggregate mit dem größtmöglichen Abstand voneinander angeordnet sind. Außerdem ist, wenn als Kraftleiter nicht miteinander verbundene Einzelelemente, beispielweise Kugeln, verwendet werden, eine asymmetrische Anordnung des Steuerschiebers zu den Chipkarten-Aufnahmeaggregaten ohne einen zusätzlichen Bauteileaufwand möglich. Die in vorteilhafter Weise in den den Kraftleitern zugeordneten Führungen aufgenommenen Schubstangen stellen gleichzeitig Verschlusselemente dar, die gefedert an dem Gehäuse der Antriebsanordnung gehaltert sein können. Den Schubstangen bzw. den an den Schubstangen angeformten Betätigungsgliedern kommt ferner eine Adapterfunktion zu, d.h. sie können für die Betätigung unterschiedlich gestalteter Chipkarten-Aufnahmeaggregate ausgebildet sein. Es ist aber auch denkbar, dass auf die Schubstangen verzichtet wird und an den den Chipkarten zugeordneten Schlitten Fortsätze ausgebildet sind, die in die Führungen der Kraftleiter eingreifen.

Der Vollständigkeit halber sei noch erwähnt, dass das gewählte Übertragungsprinzip in drei Dimensionen wirksam sein kann und somit der Steuerschieber auch außerhalb der Bewegungsebene der Chipkarten angeordnet werden kann. Ferner sei darauf hingewiesen, dass als Kraftleiter außer einzelnen, vorzugsweise handelsüblichen Stahlkugeln auch Kugelketten, Ketten aus miteinander kuppelbaren kugel- oder tonnenförmigen Kettengliedern oder einteilig hergestellte, flexible Stränge mit kugelförmigen Abschnitten Anwendung finden können. Ebenso lassen sich in geeigneter Weise in dem Gehäuse der Antriebsanordnung geführte, band- oder drahtförmige Kraftleiter aus Federstahl vorsehen. Auch in einer im Gehäuse ausgebildeten Nut geführte und mittels des Deckels in der Nut gehaltene, T-förmige Druckelemente, die beispielweise mittels angeformter Schlaufen flexibel miteinander verbunden sind, sind als Kraftleiter denkbar.

Im folgenden sei die Erfindung anhand von Zeichnungen erläutert. Es zeigen:
- Figur 1,: eine Untersicht der erfindungsgemäßen, teilweise schematisch dargestellten Antriebsordnung mit einer Teildarstellung des abgenommenen Deckels und einer Darstellung der Zuordnung der Antriebsanordnung zu den Chipkarten-Aufnahmeaggregaten eines Fahrtschreibers,
- Figur 2,: eine der Orientierung dienende Frontansicht des Fahrtschreibers mit in einer Ebene nebeneinander angeordneten Chipkarten-Aufnahmeaggregaten,
- Figur 3,: eine Draufsicht eines aus zwei Kraftleitern und einem Steuerschieber bestehenden Bauteils,
- Figur 4,: einen Schnitt der Antriebsanordnung gemäß der Schnittlinie A in Figur 1,
- Figur 5,: einen Teilschnitt des Fahrtschreibers mit einer Seitenansicht der in dem Fahrtschreiber verbauten Antriebsanordnung sowie einem Teilschnitt gemäß der Schnittlinie B in Figur 1.

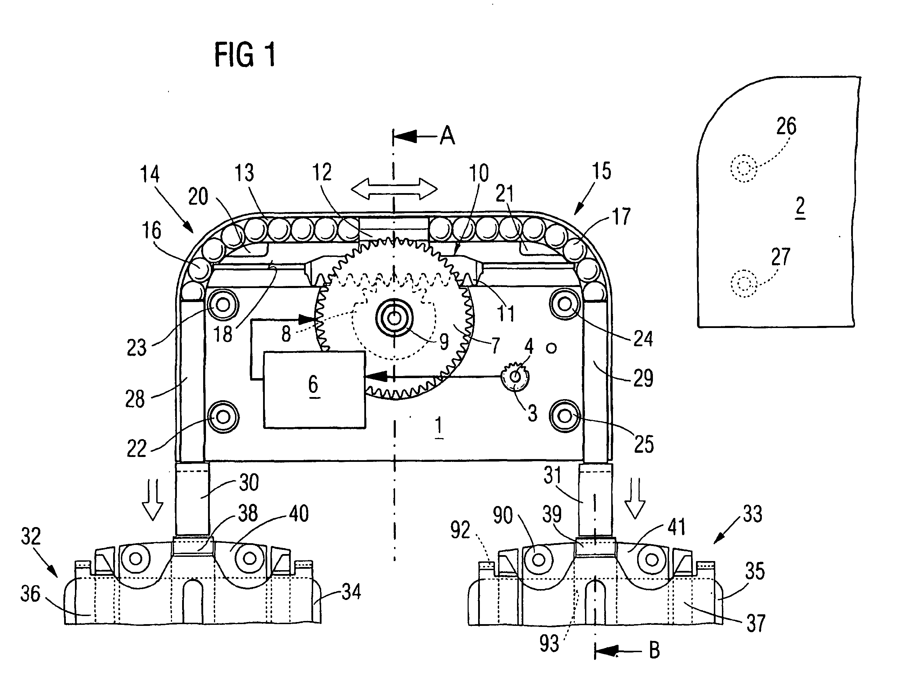

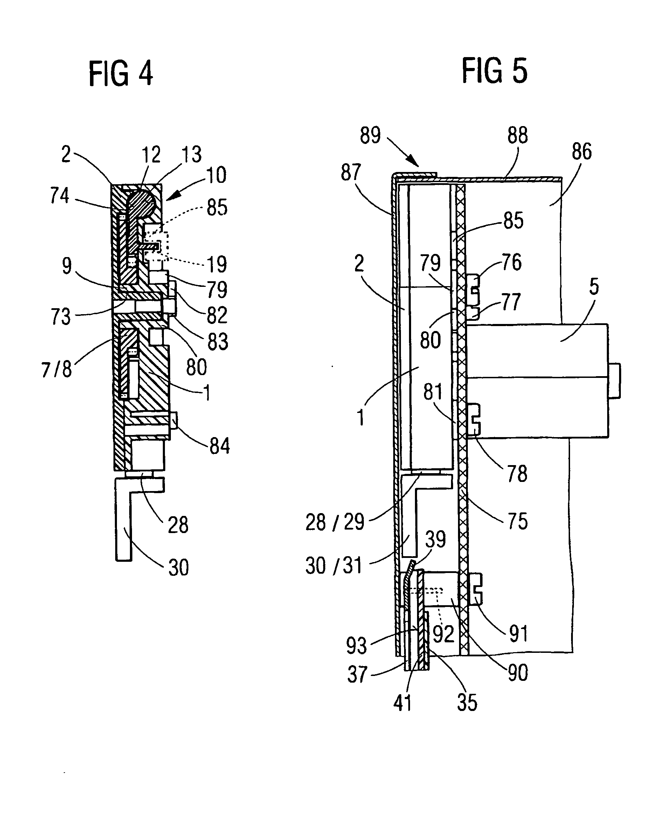

Wie aus der Figur 1 ersichtlich ist, sind die Funktionselemente der Antriebsordnung im wesentlichen in einem Gehäuse 1 gelagert, welches mittels eines Deckels 2 schließbar ist. Mit 3 ist ein auf der in das Gehäuse 1 eingreifenden Motorwelle 4 eines Stellmotors 5 (Figur 5) befestigtes Antriebsritzel bezeichnet. Ein schematisch dargestelltes, dem Antriebsritzel 3 nachgeschaltetes Untersetzungsgetriebe 6 steht in Wirkverbindung mit einem Zahnradpaar 7, 8, welches auf einer Hohlachse 9 gelagert ist. Das Zahnrad 8 kämmt mit einer an einem Steuerschieber 10 ausgebildeten Verzahnung 11. Der Steuerschieber 10 ist in dem Gehäuse 1 verschiebbar gelagert und greift mit einem Finger 12 in einen Kanal 13 ein, welcher für die Lagerung von mehreren, als flexible, druckübertragende Kraftleiter 14 und 15 dienenden, frei beweglichen Kugeln, von denen jeweils eine mit 16 bzw. 17 bezeichnet ist, vorgesehen ist. Diese Lösung ermöglicht die Übertragung großer Stellkräfte bei relativ geringer Reibung. Der Führung des Steuerschiebers 10 dient außer dem Zahnradpaar 7, 8 eine in einen in dem Gehäuse 1 ausgebildeten Schlitz 18 eingreifende Führungszunge 19 (Figur 4). Mit 20 und 21 sind im Gehäuse 1 ausgebildete, dem Steuerschieber 10 zugeordnete Endanschläge bezeichnet. Hohlzapfen 22, 23, 24 und 25, die mit nicht näher bezeichneten Durchgangsbohrungen versehen sind, dienen der Aufnahme des Deckels 2 indem an dem Deckel 2 angeformte Stehbolzen, von denen zwei, 26 und 27, in Figur 1 dargestellt sind, in die nicht bezeichneten Senkungen der Hohlzapfen 22, 23, 24, 25 eingreifen. Mit 28 und 29 sind in dem Kanal 13 geführte Schubstangen bezeichnet, deren Bestätigungsglieder 30 und 31 in geeigneter Weise für das Zusammenwirken mit in Figur 1 angedeuteten Chipkarten-Aufnahmeaggregaten 32 und 33 des betreffenden Fahrtschreibers ausgebildet sind.

Bei dem in der Figur 1 dargestellten Funktionszustand befindet sich die Antriebsanordnung in einer neutralen Position, aus der heraus entweder die eine oder die andere Chipkarte 34 bzw. 35 in ihre Entnahmeposition verschoben werden kann. Hierzu wirken die Betätigungsglieder 30, 31 der Schubstangen 28, 29 mit die Chipkarten 34, 35 tragenden Schlitten 36 und 37 bzw. mit an den Schlitten 36, 37 ausgebildeten Zungen 38 und 39 zusammen. Die Schlitten 36, 37 sind in geeigneter Weise an Trägern 40 und 41 der Chipkarten-Aufnahmeaggregate 32, 33 verschiebbar gelagert. Gegebenenfalls sind den Schlitten 36, 37 Verriegelungsmittel zugeordnet.

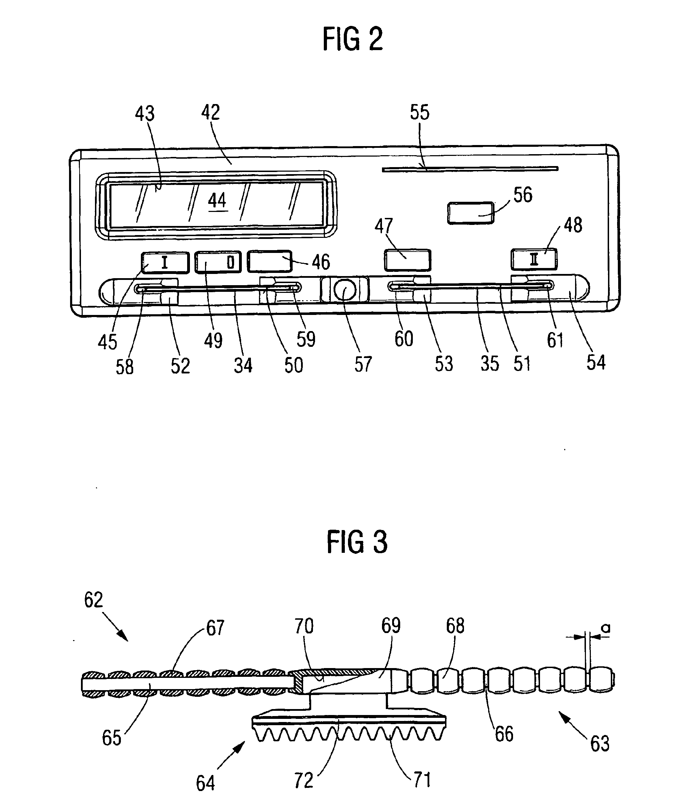

Die Figur 2 soll verständlich machen, wie die Chipkarten-Aufnahmeaggregate 32, 33 in einem Fahrtschreiber, der beispielweise ein quaderförmiges Gehäuse aufweist, angeordnet sind. Die Figur 2 zeigt eine das Einbaugehäuseteil des Fahrtschreibers abdeckende Frontblende 42. Mit 43 ist ein Fensterausschnitt bezeichnet, durch welchen die Anzeige eines Displays 44 lesbar ist. Ferner sind mehrerer Tasten 45, 46, 47 und 48 aus der Frontblende 42 herausgeführt. Dabei dienen die Tasten 45 und 48 dem Anmelden von Fahrer und Beifahrer, die Tasten 6 und 7 in Kombination mit den Tasten 45 und 48 u.a. dem Freigeben der jeweiligen, Fahrer und Beifahrer zugeordneten persönlichen Chipkarten 34, 35. Mit einer Abdeckung 49 ist eine Diagnosezwecken dienende Steckerfassung verschlossen. In der Frontblende 42 angebrachte, z.T. trichterförmig angesenkte Führungsschlitze 50 und 51 dienen dem Vororientieren beim Eingeben der Chipkarten 34, 35 von Fahrer und Beifahrer in die jeweiligen, in dem Einbaugehäuseteil befindlichen Chipkarten-Aufnahmeaggregate 32, 33 des Fahrtschreibers. Freisparungen 52 und 53 des wulstförmigen Vorsprungs 54 der Frontblende 42 dienen als Eingabemulden dem Vorstecken der Chipkarten 34, 35 in die jeweiligen Lese-/Schreibpositionen. Ein mit 55 bezeichneter Schlitz ist für den Durchtritt des Druckträgers eines in dem Fahrtschreiber angeordneten Belegdrukkers vorgesehen. Eine Taste 56 dient der Druckauslösung. Mit 57 ist eine Plombe bezeichnet, welche eine Verschraubung der Frontblende 42 an dem Einbaugehäuseteil sichert. In der Figur 2 sind außerdem vor den Chipkarten 34, 35 eingeschwenkte, in den Chipkarten-Aufnahmeaggregaten 32, 33 gelagerte Riegelelemente 58, 59 und 60, 61 dargestellt.

Die Figur 3 zeigt eine für die Serienfertigung optimierte Lösung, bei der den Chipkarten-Aufnahmeaggregaten 32, 33 zugeordnete Kraftleiter 62 und 63 und ein Steuerschieber 64 ein einziges, spritzgießtechnisch ausformbares Bauteil bilden. Dabei besteht jeder Kraftleiter 62, 63 aus einem aus elastomerem Material gefertigten Strang 65 bzw. 66 und daran mittels der Zwei-Komponenten-Spitzgießtechnik angeformten, tonnenförmigen Gleitkörpern aus nichtelastomerem Material. Von den Gleitkörpern, die mit einem gewissen Abstand "a" zueinander an den Strängen 65, 66 angeformt sind, ist jeweils einer mit 67 bzw. 68 bezeichnet. Wie die Figur 3 ferner zeigt, sind die Kraftleiter 62, 63 über die Stränge 65, 66 unmittelbar mit dem in den Kanal 13 eingreifenden Finger 69 des Steuerschiebers 64, der zweckmäßigerweise aus dem Material der Gleitkörper 67, 68 geformt ist, verbunden. Eine mit 70 bezeichnete Aussparung dient der Vermeidung von Materialanhäufung an dem Finger 69. Ansonsten ist der Steuerschieber 64 gleichgestaltet wie der Steuerschieber 10, d.h. mit einer Verzahnung 71 und einer Führungszunge 72 versehen. An dieser Stelle sei noch erwähnt, dass zur Bildung der Kraftleiter 62, 63 aus formtechnischen Gründen die Gleitkörper 67, 68 axial geschlitzt und die Querschnitte der verbindenden Stränge 65, 66 dem Profil der Schlitze entsprechend ausgebildet sein können.

Aus dem Schnitt gemäß der Figur 4 geht insbesondere hervor, wie Gehäuse 1 und Deckel 2, nachdem die Funktionsteile der Antriebsanordnung in das Gehäuse 1 eingelegt sind, zusammengefügt sind. Ein an dem Deckel 2 ausgeformter Zentrierdorn 73, welcher in die Hohlachse 9 eingreift, sowie eine nicht dargestellte, zweckmäßigerweise im Bereich der Durchführung der Motorwelle 4 vorgesehene Verdrehsicherung dienen der Ausrichtung des Deckels 2 an dem Gehäuse 1. Mit 74 ist eine an dem Deckel 2 ausgebildete, den Kanal 13 ergänzende Rinne bezeichnet. Die Befestigung des Deckels 2 an dem Gehäuse 1 erfolgt indem die Antriebsanordnung an der bereits erwähnten Leiterplatte 75 des Fahrtschreibers montiert wird. Hierzu dienen mehrere Schraubverbindungen, von denen drei Schrauben 76, 77 und 78 in Figur 5 sichtbar sind. Den Schrauben 76, 77, 78 sind in den Stehbolzen 26, 27 sowie in dem Dorn 73, welche in die Hohlzapfen 22, 23, 24, 25 und die Hohlachse 9 eingreifen, im einzelnen nicht bezeichnete Gewindebohrungen zugeordnet. D.h., das Gehäuse 1 wird mittelbar über den Deckel 2 an der Leiterplatte 75 befestigt. Als Auflage dienen am Gehäuse 1 ausgebildete, mit Durchgangsbohrungen versehene Stützen 79, 80 und 81 mit daran angeformten, dem Ausrichten der Antriebsanordnung an der Leiterplatte 75 dienenden Ansätzen 82, 83 und 84. Mit 85 ist eine von zwei, an der Leiterplatte 75 angebrachten Gabellichtschranken bezeichnet, die im Zusammenwirken mit der Führungszunge 19 des Steuerschiebers 10 der Steuerung des Stellmotors 5 dienen. D.h., je nach ausgesteuerter Drehrichtung des Stellmotors 5 wird ausgehend von der in Figur 1 dargestellten neutralen Position mittels des Steuerschiebers 10 und der Kraftleiter 14, 15 entweder die Schubstange 28 oder die Schubstange 29 in Richtung Ausgeben einer Chipkarte 34, 35 betätigt und der Steuerschieber 10 nachfolgend in die neutrale Position zurückgeführt, um ein erneutes Eingeben einer Chipkarte zu gewährleisten. In diesem Zusammenhang sei noch erwähnt, dass zwischen den Schubstangen 28, 29 und dem Gehäuse 1 jeweils nicht dargestellte Stift-Schlitz-Verbindungen vorgesehen ist, die als Verdrehsicherungen dienen und eine problemlose Handhabbarkeit der Antriebsanordnung vor deren Einbau in einen Fahrtschreiber ermöglichen.

Die Figur 5, die Abschnitte einer Seitenwand 86, des Bodens 87 und der Rückwand 88 des Einbaugehäuseteils 89 des Fahrtschreibers zeigt, verdeutlicht den geringen Raumbedarf der erfindungsgemäßen Antriebsanordnung, insbesondere was die Bauhöhe und die Bautiefe anbelangt. Die Figur 5 zeigt ferner mit dem Teilschnitt B die Zuordnung der Chipkarten-Aufnahmeaggregate 32, 33 zu der Leiterplatte 75. Hierzu dienen an den Trägern 40, 41 angeformte, mit Gewindebohrungen versehene und als Abstandhalter gegenüber dem Boden 87 ausgebildete Distanzbolzen 90 und Schrauben 91. Mit 92 ist einer der an dem Schlitten 36, 37 angeformten, den Chipkarten 34, 35 zugeordneten Mitnehmer bezeichnet. 93 bezeichnet eine in den Trägern 40, 41 vorgesehene Aussparung, die den Freiraum für die Bewegung der an den Schlitten 36, 37angewinkelt ausgebildeten Zungen 38, 39 und das Eintauchen der Betätigungsglieder 30, 31 bildet.

## Patentansprüche

1. Antriebsanordnung mit wenigstens einem in einem Fahrtenschreiber angeordneten Chipkarten-Aufnahmeaggregat zum Verbringen einer Chipkarte in die Entnahmeposition, wobei die Antriebsanordnung einen in seiner Drehrichtung umsteuerbaren Stellmotor, einen mit dem Stellmotor getrieblich in Wirkverbindung stehenden Steuerschieber und zwischen dem Steuerschieber und dem Chipkarten-Aufnahmeaggregat vorgesehene Übertragunsmittel umfasst, **dadurch gekennzeichnet , dass** als Übertragungsmittel ein flexibler, druckübertragender Kraftleiter (14 oder 15 und 62 oder 63) dient und das dem Kraftleiter (14 oder 15 und 62 oder 63) eine richtungsumlenkende Führung zugeordnet ist.

2. Antriebsanordnung nach Anspruch 1, **dadurch gekennzeichnet, dass** als Kraftleiter (14 oder 15) einzelne, in einem Kanal (13, 74) frei beweglich geführte Druckelemente vorgesehen sind.

3. Antriebsanordnung nach Anspruch 1, **dadurch gekennzeichnet, dass** als Kraftleiter (14 oder 15) einzelne, zu einer Kette zusammengefasste Druckelemente vorgesehen sind.

4. Antriebsanordnung nach Anspruch 1, **dadurch gekennzeichnet, dass** als Druckelemente Kugeln (16, 17) vorgesehen sind.

5. Antriebsanordnung nach Anspruch 1,
**dadurch gekennzeichnet,**
**dass** ein in das Chipkarten-Aufnahmeaggregat (32 oder 33) eingreifendes Betätigungsglied (30 oder 31) in der Führung des Kraftleiters (14 oder 15) verschiebbar gelagert ist.

6. Antriebsanordnung nach Anspruch 1,
**dadurch gekennzeichnet,**
**dass** die Druckelemente gelenkig miteinander verbindbar sind.

7. Antriebsanordnung nach Anspruch 1,
**dadurch gekennzeichnet,**
**dass** als Kraftleiter (14 oder 15) ein einziges, elastisch verformbares Druckelement Anwendung findet.

8. Antriebsanordnung nach Anspruch 7,
**dadurch gekennzeichnet,**
**dass** das Druckelement band- oder drahtförmig ausgebildet ist.

9. Antriebsanordnung nach Anspruch 7,
**dadurch gekennzeichnet,**
**dass** das Druckelement aus einem aus elastomerem Material hergestellten Strang (65 oder 66) mit daran spritzgießtechnisch angeformten Gleitkörpern aus nichtelastomerem Material besteht.

10. Antriebsanordnung nach Anspruch 9,
**dadurch gekennzeichnet,**
**dass** der Kraftleiter (62 oder 63) und der Steuerschieber (64) ein einziges, spritzgießtechnisches hergestelltes Bauteil darstellen.

11. Antriebsanordnung nach Anspruch 1,
**dadurch gekennzeichnet,**
**dass** dem Steuerschieber (10, 64) bei zwei nebeneinander angeordneten Chipkarten-Aufnahmeaggregaten (32, 33) zwei im wesentlichen gleiche Kraftleiter (14, 15 oder 62, 63) zugeordnet sind.

12. Antriebsanordnung nach Anspruch 11,
**dadurch gekennzeichnet,**
**dass** die den Kraftleitern (14, 15 oder 62, 63) zugeordnete Führung (13, 74) im wesentlichen in einem wenigstens den Steuerschieber (10, 64) und das diesen treibende Getriebe (3, 6, 7, 8) lagernden Gehäuse (1) ausgebildet ist.

## Claims

1. Drive arrangement having at least one smart card holder, which is arranged in a tachograph, for moving a smart card to the removal position, with the drive arrangement having a reversible actuating motor, a control slide which is operatively connected by a transmission to the actuating motor, and transmission means which are provided between the control slide and the smart card holder,
**characterized**
**in that** a flexible, force-transmitting force conductor (14 or 15 and 62 or 63) is used as the transmission means, and in that the force conductor (14 or 15 and 62 or 63) has an associated direction-changing guide.

2. Drive arrangement according to Claim 1,
**characterized**
**in that** individual pressure elements which are guided in a channel (13, 74) such that they can move freely are provided as force conductors (14 or 15).

3. Drive arrangement according to Claim 1,
**characterized**
**in that** individual pressure elements, which are combined to form a chain, are provided as force conductors (14 or 15).

4. Drive arrangement according to Claim 1,
**characterized**
**in that** balls (16, 17) are provided as pressure elements.

5. Drive arrangement according to Claim 1,
**characterized**
**in that** an operating element (30 or 31) which engages in the smart card holder (32 or 33) is mounted in the guide for the force conductor (14 or 15) such that it can move.

6. Drive arrangement according to Claim 1,
**characterized**
**in that** the pressure elements can be connected to one another in an articulated manner.

7. Drive arrangement according to Claim 1,
**characterized**
**in that** a single pressure element, which can be deformed elastically, is used as the force conductor (14 or 15).

8. Drive arrangement according to Claim 7,
**characterized**
**in that** the pressure element is in the form of a strip or wire.

9. Drive arrangement according to Claim 7,
**characterized**
**in that** the pressure element comprises a strand (65 or 66), which is produced from elastomer material and has sliding bodies which are integrally formed on it by injection moulding and are composed of non-elastomer material.

10. Drive arrangement according to Claim 9,
**characterized**
**in that** the force conductor (62 or 63) and the control slide (64) represent a single component which is produced by injection moulding.

11. Drive arrangement according to Claim 1,
**characterized**
**in that**, when two smart card holders (32, 33) are arranged alongside one another, the control slide (10, 64) has two essentially identical associated force conductors (14, 15 or 62, 63).

12. Drive arrangement according to Claim 11,
**characterized**
**in that** the guide (13, 74) which is associated with the force conductors (14, 15 or 62, 63) is formed essentially in a housing (1) which bears at least the control slide (10, 64) and the transmission (3, 6, 7, 8) which drives it.

## Revendications

1. Système d'entraînement avec au moins un réceptacle de carte à puce monté dans un tachygraphe pour amener une carte à puce dans la position de retrait, où le système d'entraînement comprend un servomoteur dont le sens de rotation peut être inversé, un curseur de commande entraîné par le servomoteur et des moyens de transmission prévus entre le curseur de commande et le réceptacle de carte à puce **caractérisé en ce qu'**un translateur de force de poussée (14 ou 15 et 62 ou 63), souple et transmettant une pression, sert de moyen de transmission et qu'un guide faisant changer sa direction est affecté au translateur de force de poussée (14 ou 15 et 62 ou 63).

2. Système d'entraînement selon la revendication 1 **caractérisé en** c e qu'il est prévu, en tant que translateur de force de poussée (14 ou 15), des éléments individuels de pression qui se déplacent librement dans un canal (13, 74).

3. Système d'entraînement selon la revendication 1 **caractérisé en ce qu'**il est prévu, en tant que translateur de force de poussée (14 ou 15), des éléments individuels de pression assemblés pour former une chaîne.

4. Système d'entraînement selon la revendication 1 **caractérisé en ce qu'**il est prévu, en tant qu'éléments de pression, des billes (16, 17).

5. Système d'entraînement selon la revendication 1 **caractérisé en ce qu'**un élément de manoeuvre (30 ou 31) s'engageant dans le réceptacle (32 ou 33) de cartes à puce est monté coulissant dans le guide du translateur de force de poussée (14 ou 15).

6. Système d'entraînement selon la revendication 1 **caractérisé en ce que** les éléments de pression peuvent être liés les uns aux autres d'une façon articulée.

7. Système d'entraînement selon la revendication 1 **caractérisé en ce qu'**un seul élément de pression déformable d'une façon élastique est utilisé comme translateur de force de poussée (14 ou 15).

8. Système d'entraînement selon la revendication 7 **caractérisé en ce que** l'élément de pression est conçu sous forme de feuillard ou de fil.

9. Système d'entraînement selon la revendication 7 **caractérisé en ce que** l'élément de pression se compose d'un boyau (65 ou 66) fabriqué en matière première élastomère avec des pièces coulissantes en matière première non élastomère qui y sont façonnées en moulage par injection.

10. Système d'entraînement selon la revendication 9 **caractérisé en ce que** le translateur de force de poussée (62 ou 63) et le curseur de commande (64) constituent un seul constituant fabriqué en moulage par injection.

11. Système d'entraînement selon la revendication 1 **caractérisé en ce que** deux translateurs de force de poussée (14, 15 ou 62, 63), pour l'essentiel semblables, sont affectés au curseur de commande (10, 64) lorsque deux réceptacles (32, 33) de cartes à puce sont placés l'un à côté de l'autre.

12. Système d'entraînement selon la revendication 11 **caractérisé en ce que** le guide (13, 74) affecté aux translateurs de force de poussée (14, 15 ou 62, 63) est ménagé, pour l'essentiel, dans un boîtier (1) renfermant au moins le curseur de commande (10, 64) et l'entraînement (3, 6, 7, 8) qui le contrôle.
